# EUROPÄISCHE PATENTSCHRIFT

(11) **EP 1 867 166 B1**
(45) Veröffentlichungstag und Bekanntmachung des Hinweises auf die Patenterteilung: **03.12.2014**
(21) Anmeldenummer: 06743217.9
(22) Anmeldetag: 28.03.2006
(51) Int. Cl.: H04N 7/173

(54) **VERFAHREN UND ANORDNUNG ZUM SPEICHERN UND WIEDERGEBEN VON TV-SENDUNGEN**
METHOD AND ARRANGEMENT FOR STORING AND PLAYING BACK TV PROGRAMMES
PROCEDE ET DISPOSITIF DE MISE EN MEMOIRE ET DE REPRODUCTION D'EMISSIONS DE TV

(30) Priorität: 30.03.2005 US 666392 P
(43) Veröffentlichungstag der Anmeldung: 19.12.2007
(73) Patentinhaber: Nokia Solutions and Networks GmbH & Co. KG, 81541 Munich (DE)
(72) Erfinder: STELZL, Rudolf, 85221 Dachau (DE); JENZOWSKY, Stefan, 14167 Berlin (DE); SCHEUER, Axel, 80804 München (DE); SCHWEIKHARDT, Harald, 81479 München (DE); HIELSCHER, Christoph, 81549 München (DE); COLES, Christopher, B., Littleton, CO 80127 (US)
(74) Vertreter: Weidel, Gottfried
(86) Internationale Anmeldenummer: PCT/EP2006/061072
(87) Internationale Veröffentlichungsnummer: WO 2006/103216

(56) Entgegenhaltungen:
- EP-A- 0 993 142
- WO-A-01/97520
- WO-A-2004/049692
- US-A1- 2002 025 777
- US-A1- 2004 154 040
- US-A1- 2005 002 640
- GRIWODZ C ET AL: "PROTECTING VOD THE EASIER WAY" PROCEEDINGS OF THE ACM MULTIMEDIA 98. MM '98. BRISTOL, SEPT. 12 - 16, 1998, ACM INTERNATIONAL MULTIMEDIA CONFERENCE, NEW YORK, NY : ACM, US, Bd. CONF. 6, 12. September 1998 (1998-09-12), Seiten 21-28, XP000977484 ISBN: 1-58113-036-8

## Beschreibung

Die vorliegende Erfindung betrifft ein Verfahren und eine Anordnung zum Speichern und Wiedergeben von TV-Sendungen. Insbesondere liefert die vorliegende Erfindung ein verbessertes Verfahren und eine verbesserte Anordnung für den Betrieb eines Netzwerk-PVR.

Nachdem bandbasierte analoge Videoaufzeichnungsgeräte über Jahrzehnte hinweg für Heimanwender die einzige Möglichkeit darstellten, über Antennen-, Kabel- oder Satellitenfernsehen ausgestrahlte Sendungen aufzuzeichnen und komfortabel aufzubewahren, gibt es nach dem Verfügbarwerden schneller und gleichzeitig preiswerter Videoprozessoren und leistungsfähiger Videocodecs wie etwa MPEG2 (1994) und MPEG4 (1998) seit einigen Jahren eine Reihe von meist festplattenbasierten digitalen Geräten, die neben der reinen Videoaufzeichnung eine Reihe von Komfortfunktionen bieten.

Diese neue Gerätegeneration wird häufig als persönlicher Videorekorder (PVR), mitunter auch als digitaler Videorecorder (DVR) bezeichnet. Während diese modernen Geräte natürlich auch wie klassische Geräte zum einfachen Aufzeichnen und späteren Wiedergeben von Sendungen genutzt werden können, gehen deren Fähigkeiten darüber bei weitem hinaus. Ein häufig genutztes Merkmal eines PVR ist beispielsweise das sogenannte zeitversetzte Fernsehen (Time Shifting), bei dem der Nutzer mit dem Wiedergeben einer Sendung bereits beginnt, während die Aufzeichnung noch läuft. Dank der leistungsfähigen Hardware eines modernen PVR ist die dabei erreichte Bildqualität besser als die eines herkömmlichen VHS oder SVHS Bandgeräts.

Aus der Veröffentlichung US 2004/154040 A1 (ELLIS MICHAEL D), 5. August 2004 (2004-08-05), ist ein interaktives Televisionssystem bekannt, in welchem eine interaktive Televisionsapplikation genutzt wird, netzbasierte oder lokale PVR-Fähigkeiten zu unterstützen. Ein Nutzer kann diese Applikation nutzen, um Listen von Programmlisten anzusehen. Die interaktive Televisionsapplikation kann dem Nutzer erlauben, eine Erinnerung für das ausgewählte Programm zu der vorgesehen Sendezeit zu veranlassen. Die Applikation kann dem Nutzer ebenso erlauben, eine Erinnerung für das ausgewählte Programm zu veranlassen zu einer späteren Zeit, zu der das Programm nicht zum Broadcast vorgesehen ist. Infolge kann der Nutzer den netzbasierten oder lokalen persönlichen Videorekorder anweisen, das Programm wiederzugeben oder die Erinnerung erneut zu verschieben.

Aus der Veröffentlichung GRIWODZ C ET AL: "PROTECTING VOD THE EASIER WAY", PROCEEDINGS OF THE ACM MULTIMEDIA 98, MM'98, BRISTOL, SEPT. 12-16, 1998, ACM INTERNATIONAL MULTIMEDIA CONFERENCE, NEW YORK, NY: ACM, US, Bd. CONF. 6, 12. September 1998 (1998-09-12), Seiten 21-28, XP000977484 ISBN: 1-58113-036-8, ist ein Ansatz bekannt, bei dem der überwiegende Teil des Videos absichtlich korrumpiert wird und via Multicast Verbindungen verbreitet werden kann, während der Teil zur Rekonstruktion des Originals jedem Empfänger individuell zugestellt wird. Ebenso werden Mittel vorgeschlagen zur Abschreckung vor Wiederverkauf des Multimediainhalts durch Kunden. Ein Vorschlag führt eine empfängerseitige Einführung von Wasserzeichen in das Video ein, der andere nutzt seltene korrumpierte Bytes, um die Einzigartigkeit jeder Kopie zu erreichen.

Das zeitversetzte Fernsehen erlaubt es dem Nutzer auch, eine zunächst live angesehene Sendung zu "pausieren", etwa um einen Anruf entgegenzunehmen, und die Wiedergabe später fortzusetzen, wobei es sich für den Nutzer so darstellt, als habe er tatsächlich die Live-Ausstrahlung pausiert und später fortgesetzt. Im Hintergrund hat jedoch der Druck des Nutzers auf die "Pause"-Taste seinen PVR veranlaßt, das laufende Programm aufzuzeichnen, und der erneute Druck auf die "Pause"-Taste führt dazu, daß die aufgezeichnete Sendung einerseits weiter aufgezeichnet und andererseits bereits wiedergegeben wird.

Großer Beliebtheit erfreut sich auch die Fähigkeit eines PVR, mit minimaler Verzögerung größere Abschnitte in einer Aufzeichnung überspringen zu können. Häufig wird dies benutzt, um in der Aufzeichnung enthaltene Werbeblöcke bei der Wiedergabe zu überspringen. Um diese Fähigkeit hat sich eine Reihe von Diensten etabliert, die das Auffinden der Grenzen der Werbeblöcke erleichtern, etwa indem der Beginn und das Ende eines Werbeblocks als auf den Beginn einer Sendung bezogene Zeitpunkte als Index zur Aufzeichnung abgelegt werden und somit bei der Wiedergabe ein automatisches Überspringen der Werbung möglich wird.

Neben speziell angepaßten Unterhaltungselektronikgeräten werden zunehmend auch multimedia-fähige PCs mit geeigneter Software als PVR genutzt (bekannt als Home Theater PC, HTPC). Technisch unterscheidet sich ein spezieller PVR von einem PC-PVR kaum; beide weisen einen großen (Platten-) Speicher auf, ausreichend Prozessorleistung und geeignete Videocodecs.

Beide Plattformvarianten sind durch konfigurierbare Software bzw. Firmware in der Lage, dem Nutzer weitere Funktionen zu bieten, etwa die Suche nach Sendungen, die thematisch zu seinen Lieblingssendungen passen. Beiden Plattformvarianten ist gemein, daß die Aufzeichnung lokal beim Nutzer erfolgt und die Menge aufzeichenbarer Sendungen durch den lokalen Plattenspeicher begrenzt ist. Häufig ist es deshalb möglich, aufgezeichnete Sendungen vom internen Speicher des Geräts auf beschreibbare Medien wie (wieder)beschreibbare CD oder DVD zu transferieren. Dies ist aber mit Aufwand verbunden, und nicht zuletzt ist auch der Preis eines PVR erheblich. Und auch PVR leiden unter dem Problem, daß zum parallelen Aufzeichnen mehrer Sendungen auch mehrere PVR benötigt werden. Teurere Multituner-Geräte lösen dieses Problem nur bedingt, da stets weniger Tuner als TV Stationen vorliegen werden und außerdem die - für einen Kanal ausreichend leistungsfähige - Hardware des PVR bei der parallelen Aufzeichnung mehrerer Kanäle an ihre Grenzen stößt.

Um Nutzern alle Vorteile eines PVR bieten zu können, ohne daß diese die Investition in einen PVR tätigen müssen, wurde in dem Whitepaper "Network PVR: Everything on Demand", Jay Schiller, nCube Corporation, vormals erhältlich im Internet unter http://www.ncube.com/pressroom/downloads/nvpr-whitepaper.pdf ein Netzwerk-PVR vorgeschlagen, bei dem Speicher, Kodierlogik und Codecs durch einen Anbieter im Kabelnetz vorgehalten werden. Der Nutzer erhält ein Gerät, mit dem er Sendungen zur Speicherung auswählen und gespeicherte Sendungen abrufen kann, die dann mittels breitbandiger Verbindung in Echtzeit an den Nutzer übertragen werden. Ein solches Gerät kann im Vergleich zu einem PVR oder einem HTPC wesentlich weniger leistungsfähig sein. Gleichzeitig kann der Nutzer praktisch unbegrenzt Speicherplatz auf dem zentralen PVR-Server mieten, während der Betreiber des PVR-Servers nur eine Kopie jeder Sendung vorhalten muß, die dann bei Bedarf an jene Nutzer verteilt wird, die diese Sendung in ihrem (virtuellen) Speicher abgelegt haben.

In einer Fortbildung kann ein solcher Netzwerk-PVR so ausgestaltet sein, daß das "Programmieren" des Netzwerk-PVR durch den Nutzer entfällt und der Nutzer statt dessen auf alle Sendungen seines Programm-Bouquets etwa der letzten 4 Wochen Zugriff hat.

Problematisch ist dabei allerdings, daß nur eine Kopie einer Sendung für alle Nutzer abgelegt wird und der Zugriff der Nutzer darauf entweder für eine gewisse Zeit ohne Einschränkungen möglich ist oder aber in einer Datenbank festgehalten wird, welcher Nutzer eine bestimmte Sendung "aufgenommen" hat, und der Zugriff auf die Aufzeichnung dann durch die Datenbank gestattet oder verweigert wird. Denn dies kann in einigen Rechtssystemen zu unlösbaren Konflikten mit Rechteinhabern der ausgestrahlten Sendungen sowie Fernsehanbietern und deren Nutzungsbedingungen führen.

Es ist daher eine Aufgabe der Erfindung, ein Verfahren und eine Anordnung zum Speichern und Wiedergeben von TV-Sendungen anzugeben, das diesen Nachteil vermeidet.

Diese Aufgabe wird gelöst durch eine Anordnung zum Speichern und Wiedergeben von TV-Sendungen gemäß Anspruch 1.

Die Erfindung betrifft ferner ein Verfahren zum Speichern und Wiedergeben von TV-Sendungen gemäß Anspruch 8.

Das genannte Problem wird durch die Erfindung vorteilhaft gelöst, indem nicht die komplette Sendung im Netzwerk-PVR gespeichert wird, sondern nur der überwiegende (zentrale) Teil, und ein kleiner (lokaler) Teil der Daten im Endgerät abgelegt wird. Damit sind die im Netzwerk-PVR abgelegten (zentralen) Daten keine vollständige und damit brauchbare Sendung mehr.

Vorteilhafte Ausgestaltungen sind in den abhängigen Ansprüchen ausgeführt.

Die kleine im Endgerät abzulegende Datenmenge erlaubt es, dort auf herkömmliche Festplattenspeicher großer Kapazitäten zu verzichten und als Endgeräte-Speicher einen Flash-Speicher oder eine Kleinstfestplatte, etwa ein handelsübliches Hitachi Microdrive, vorzusehen. Es ist dabei möglich, die Endgeräte-Daten mittels Digital Rights Management fest an ein bestimmtes Endgerät zu koppeln, um zu verhindern, daß Nutzer untereinander diese Daten austauschen. So kann verhindert werden, daß auch Nutzer die gespeicherte Sendung sehen, welche diese nicht zur Aufnahme programmiert hatten. Alternativ kann den Nutzern gerade dieser Tauschvorgang (in begrenztem Rahmen) erlaubt werden, um den Nutzern bei Nutzung des Netzwerk-PVR die gleichen Rechte einzuräumen wie bei Nutzung der analogen Bandgeräte, bei denen die Weitergabe von Aufzeichnungen problemlos möglich ist.

Im Endgerät können beispielsweise Header-Informationen, eine zeitlich begrenzte Anfangssequenz, oder jedes n-te Datenpaket der zu speichernden Videodaten abgelegt werden; die restlichen zu speichernden Daten werden in dem mit dem PVR Server gekoppelten Massenspeicher abgelegt. Dabei können die Daten beispielsweise so gewählt werden, daß ein kurzes Intro aus den im Endgerät vorliegenden Daten abgespielt werden kann, um dem Nutzer eine unmittelbare Entscheidung zu ermöglichen, die aufgezeichnete Sendung zu löschen, ohne die Daten vorher zusammenzusetzen. Oder die Datenpakete können so gewählt werden, daß im Endgerät eine Sequenz von Standbildern vorliegt.

Das Zusammenführen der im Speicher des auswählenden Endgeräts und der im mit dem PVR Server gekoppelten Massenspeicher abgelegten Teile der Aufzeichnung erfolgt im PVR Server, wobei dann die komplettierten Videodaten zur Wiedergabe als Echtzeitdatenstrom an das Endgerät gesendet werden. Dies erlaubt die Konstruktion eines besonders einfachen Endgeräts mit minimaler Rechenleistung.

Im folgenden werden bevorzugte Ausführungsbeispiele der vorliegenden Erfindung im Zusammenhang mit einer Zeichnung näher erläutert.

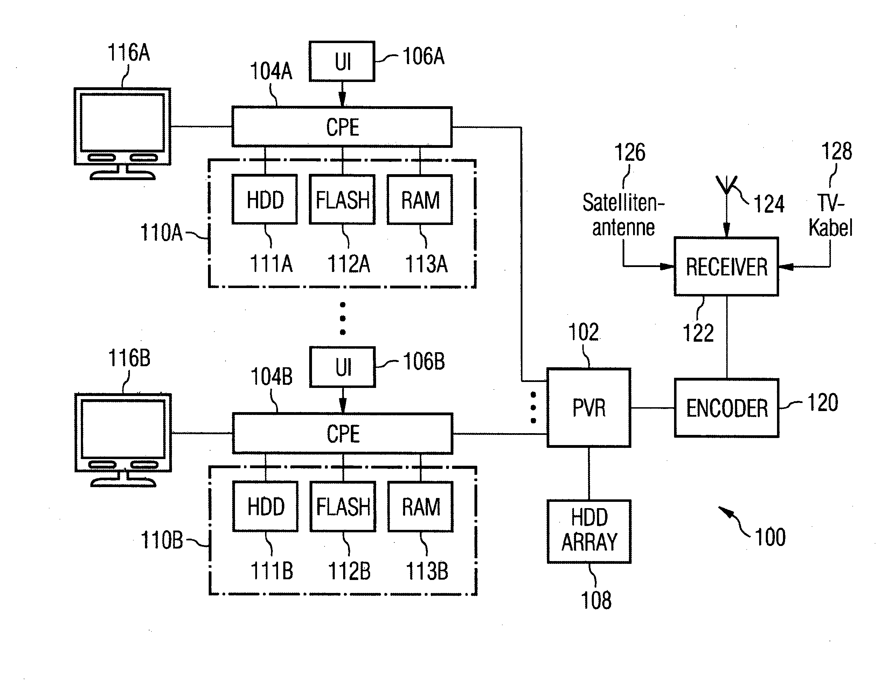

Die einzige Figur zeigt eine Anordnung 100 mit einem Netzwerk-PVR bzw. PVR Server 102 und von diesem versorgten Endgeräten 104A..104N. Der PVR Server 102 empfängt von einem Encoder 120 digital kodierte TV-Kanäle. Der Encoder wiederum empfängt die TV-Kanäle von einem Receiver 122, welcher über terrestrische Antenne 124 und/oder Satellitenantenne 126 und/oder TV-Kabel 128 geeignete TV-Signale empfängt. Der Encoder 120 und der Receiver 122 können dabei als ein Gerät konstruiert sein. Der Encoder 120 nutzt einen Codec wie etwa MPEG2 oder MPEG4 oder davon abgeleitete Codecs, um die zunächst in analoger Form vorliegenden TV-Signale in ein effizientes digitales Datenformat zu überführen. Liegt ein TV-Kanal bereits als digitaler Datenstrom vor, beispielsweise als Digital Video Broadcast DVB (terrestrisch als DVB-T, via Kabel als DVB-C oder via Satellit als DVB-S empfangen), kann der Encoder 120 diesen Datenstrom unmodifiziert an den PVR Server 102 weiterleiten oder vor Weiterleitung modifizieren, beispielsweise durch Anpassen der Bandbreite des Datenstroms an die Bandbreite der Verbindung zu den Endgeräten 104.

Der PVR Server ist mit einem Massenspeicher 108 gekoppelt, beispielsweise mit einem Festplatten-Array bzw. HDD Array. In der Technik sind zahlreiche Methoden bekannt, aus Festplatten redundante Massenspeicher-Arrays aufzubauen, die beim Ausfall einzelner Festplatten dennoch die gespeicherten Daten vollständig ausliefern können. Der Einsatz eines solchen redundanten Arrays, z.B. eines redundanten Arrays aus unabhängigen Festplatten (RAID), ist im Zusammenhang mit der vorliegenden Erfindung von Vorteil, da ein PVR Server 102 und der angeschlossene Massenspeicher 108 den Hauptteil der TV-Aufzeichnungen zahlreicher Nutzer speichert.

Die Nutzer-Endgeräte 104 sind mit dem PVR Server 102 beispielsweise über das TV-Kabelnetz oder über eine DSL-Verbindung verbunden. Moderne Codecs erlauben eine akzeptable Videoqualität mit Übertragungsraten ab wenigen hundert kbit/s. Mit den technisch über DSL-Verbindungen möglichen Bandbreiten von mehreren Mbit/s sind zwei oder mehr parallele Videoströme (für verschiedene Wiedergabegeräte im Haushalt des Nutzers) oder ein einzelner Videostrom mit hoher Qualität denkbar.

Die Endgeräte 104 sind ausgestattet oder gekoppelt mit lokalem Speicher 110, der beispielsweise als herkömmliche Festplatte bzw. HDD 111 und/oder als Flash-Speicher 112 und/oder als RAM 113 ausgebildet sein kann. Natürlich sind auch Sonderformen wie im Flash-Speicherkartenformat vorliegende Kleinstfestplatten denkbar. Flash-Speicher 112 hat dabei den Vorteil, daß eine Speicherung der Daten unabhängig vom Anliegen einer Versorgungsspannung möglich ist und gleichzeitig besonders leise Endgeräte 104 ermöglicht werden, da Flash-Speicher keine rotierenden oder andere mechanische Teile aufweist.

Der Speicher 110 kann dabei fest mit dem Endgerät 104 gekoppelt oder auswechselbar gestaltet sein. An den Speicher 110 der Endgeräte 104 bestehen geringere Anforderungen als an den Massenspeicher 108 hinsichtlich Redundanz und Ausfallsicherheit. Als Komfortmerkmal für den Nutzer kann vorgesehen werden, daß der Nutzer Sicherheitskopien der in seinem Speicher abgelegten Teile der Aufzeichnungen anfertigen kann, etwa auf einen nicht permanent im Endgerät 104 befindlichen Datenträger (beschreibbare CD oder DVD, externe Festplatte), über Netzwerkverbindung auf einem PC oder auch in einem gesonderten Speicherbereich beim PVR Diensteanbieter (nicht dargestellt).

Bei dem Endgerät bzw. CPE 104 kann es sich um eine Set-Top-Box handeln, die an ein Bildwiedergabegerät 116 angeschlossen wird. Alternativ kann das Endgerät 104 in das Bildwiedergabegerät 116 integriert sein. Das Bildwiedergabegerät 116 kann ein herkömmlicher Fernseher sein. Alternativ kann es sich um einen Monitor handeln, der selbst keinen TV-Tuner aufweist.

Das Endgerät 104 weist eine Benutzerschnittstelle 106 auf, die dem Nutzer beispielsweise dazu dient, TV-Sendungen zur Aufzeichnung auszuwählen oder sein Archiv aufgezeichneter TV-Sendungen zu verwalten. Diese Benutzerschnittstelle kann, wie auf dem Gebiet der Set-Top-Boxen üblich, so realisiert sein, daß der Nutzer Eingaben über eine Fernbedienung macht und Ausgaben über das Bildwiedergabegerät 116 angezeigt bekommt.

Hat der Nutzer eine TV-Sendung ausgewählt, wird ein Datensatz, der eine aufzuzeichnende TV-Sendung kennzeichnet, an den netzbasierten PVR 102 gesendet, der mittels eines Schedulers die TV-Sendung zur Aufnahme vorsieht. Eine Nutzerdatenbank - nicht dargestellt - verwaltet die von einem Nutzer zur Aufnahme vorgesehenen Sendungen und prüft Berechtigungen des Nutzers, etwa ob der Nutzer den entsprechenden TV-Kanal abonniert hat.

Wird eine TV-Sendung ausgestrahlt, prüft der PVR Server 102, ob ein (es genügt ein einziger) Nutzer diese Sendung zur Aufnahme vorgesehen hat. Ist dies der Fall, wird die Aufnahme vorgenommen, indem die Daten in einen lokalen und einen zentralen Teil aufgeteilt und entsprechend im Speicher 110 des Endgeräts 104 oder im Massenspeicher 108 abgelegt werden. Dabei wird vorteilhaft der überwiegende Teil der Daten zentral im Massenspeicher 108 gespeichert, die verbleibenden Daten werden an den lokalen Speicher 110 des anfordernden Endgeräts 104 gesendet. Falls an mehreren Endgeräten 104 die Sendung zur Aufnahme programmiert wurde, werden die lokalen Daten entsprechend an alle Endgeräte 104 gesendet, an welchen die Sendung zur Aufnahme programmiert wurde. Das Aufteilen der Daten kann dabei so erfolgen, daß zumindest der zentrale Datenstrom für sich genommen kein dekodierbares Videosignal (Bild und Ton) mehr liefert. Erst wenn beide Datenmengen (aus dem Speicher 110 eines Endgeräts 104 und dem Massenspeicher 108) kombiniert werden, kann die Sendung vollständig wiedergegeben werden. Die verschiedenen Möglichkeiten zur Aufteilung der Daten in einen zentralen und einen lokalen Anteil wurden bereits ausführlich erläutert.

Zur Wiedergabe können die im Speicher 110 des auswählenden Endgeräts 104 und die im Massenspeicher 108 abgelegten Teile der Aufzeichnung im PVR Server 102 kombiniert werden. Hierzu werden zunächst die im Endgerät gespeicherten Daten an den PVR Server übertragen und dort kombiniert. Anschließend werden die komplettierten Videodaten zur Wiedergabe als Echtzeitdatenstrom an das Endgerät 104 gesendet. Dies erlaubt die Konstruktion eines besonders einfachen Endgeräts 104 mit minimaler Rechenleistung. Da die im Endgerät hinterlegte Datenmenge sehr klein sein kann (in einem Ausführungsbeispiel der Erfindung genügen einige Kilobyte pro Aufzeichnung), wird der Nutzerwunsch nach Wiedergabe einer speziellen Sendung durch das zunächst erforderliche Übertragen der Daten an den PVR Server 102 nicht oder nur unmaßgeblich verzögert.

Alternativ können die im Speicher 110 des auswählenden Endgeräts 104 und die im Massenspeicher 108 abgelegten Teile der Aufzeichnung in Echtzeit im Endgerät 104 kombiniert werden. Auf entsprechende Nutzereingabe hin werden die unvollständigen Videodaten mittels des PVR Servers 102 aus dem Massenspeicher 108 als Nahe-Echtzeitdatenstrom an das Endgerät 104 gesendet, dort um die im Endgerät 104 gespeicherten Daten ergänzt und wiedergegeben. Nahe-Echtzeitdatenstrom bedeutet dabei, daß je nach Art der gewählten Aufteilung der Daten zwischen lokalem Speicher 110 und Massenspeicher 108 sich auch größere Datenmengen im lokalen Speicher befinden können, etwa Intro-Sequenzen, die zunächst abgespielt werden, bevor die bis dahin gegebenenfalls gepufferten Daten aus dem Massenspeicher 108 zur Wiedergabe aufbereitet werden. Die Übertragung der Daten an das Endgerät sollte mindestens mit der Datenrate erfolgen, mit der das Material kodiert wurde.

Werden im Speicher 110 des Endgeräts 104 Intro-Sequenzen abgelegt, die auch Headerinformationen umfassen, ohne die der verbleibende, im Massenspeicher 108 abgelegte Teil der Aufzeichnung nicht nutzbar ist, kann die Wiedergabe bei Nutzeranforderung ohne Verzögerung durch Netzwerkvorgänge beginnen, da zunächst das Intro aus dem lokalen Speicher heraus wiedergegeben werden kann, während im Hintergrund die restlichen Daten aus dem Massenspeicher 108 angefordert und zur Wiedergabe aufbereitet werden. Dies kommt der Nutzererwartung entgegen, auf Tastendruck die Wiedergabe unverzögert beginnen zu können.

Neben den bereits genannten Möglichkeiten zur Verteilung der Daten auf Massenspeicher 108 und lokalen Speicher 110 sind dem Fachmann aus der vorstehenden ausführlichen Beschreibung der Erfindung weitere Möglichkeiten zur Verteilung sofort offensichtlich. Beispielsweise wäre es denkbar, eine Art Weitbereichs-RAID zwischen Festplatten des Massenspeichers 108 und der lokalen Festplatte 111 oder dem lokalen Flash-Speicher 112 logisch zu bilden. Auch eine solche Anordnung würde bei geeigneter Definition des RAID bewirken, daß die Inhalte des Massenspeichers ohne die lokalen Inhalte nutzlos sind.

Schließlich sei darauf hingewiesen, daß sich die vorliegende Erfindung nicht nur dann anwenden läßt, wenn - wie vorstehend beschrieben - für alle Nutzer nur eine gemeinsame Kopie einer Sendung im Massenspeicher 108 hinterlegt wird, sondern auch dann, wenn für jeden Nutzer eine gesonderte Kopie einer Sendung im Massenspeicher 108 gespeichert wird. Auch in diesem Fall ist es möglich und in einigen Fällen erforderlich, die gespeicherten Sendungen in einen beim Nutzer lokal und einen beim Diensteanbieter zentral gespeicherten Teil aufzuteilen.

## Patentansprüche

1. Anordnung (100) zum Speichern und Wiedergeben von TV-Sendungen, welche folgendes aufweist:
- einen PVR Server (102) mit Mitteln zum Empfang einer Vielzahl digital kodierter TV-Kanäle und Mitteln zum Versorgen einer Vielzahl von Endgeräten (104);
- zumindest ein Endgerät (104) mit Mitteln zum Auswählen zu speichernder TV-Sendungen (106) und Mitteln zum Übertragen der Auswahl an den PVR Server;
wobei ferner folgendes vorgesehen ist:
- im PVR Server (102), Mittel zum Aufzeichnen zu speichernder TV-Sendungen, wobei ein kleiner Teil der bei der Aufzeichnung zu speichernden Daten an einen Speicher (110) eines auswählenden Endgeräts (104) gesendet wird und ein überwiegender Teil der zu speichernden Daten in einem mit dem PVR Server (102) gekoppelten Massenspeicher (108) abgelegt wird;
- Mittel zum Zusammenführen der im Speicher (110) des auswählenden Endgeräts (104) und der im mit dem PVR Server (102) gekoppelten Massenspeicher (108) abgelegten Teile der Aufzeichnung zur Wiedergabe mittels des auswählenden Endgeräts (104);
- wobei bei der Anordnung (100) das Zusammenführen der im Speicher (110) des auswählenden Endgeräts (104) und der im mit dem PVR Server (102) gekoppelten Massenspeicher (108) abgelegten Teile der Aufzeichnung im PVR Server (102) erfolgt und die komplettierten Videodaten zur Wiedergabe als Echtzeitdatenstrom an das Endgerät (104) gesendet werden.

2. Anordnung nach Anspruch 1, bei der die Mittel zum Aufzeichnen zu speichernder TV-Sendungen so gestaltet sind, daß der in dem mit dem PVR Server (102) gekoppelten Massenspeicher (108) gespeicherte überwiegende Teil der zu speichernden Daten nur bei Zusammenführung mit den im Speicher (110) des auswählenden Endgeräts (104) abgelegten Daten eine dekodierbare Bild- und Toninformation liefert.

3. Anordnung nach einem der Ansprüche 1 oder 2, bei der als Endgeräte-Speicher (110) ein Flash-Speicher (112) oder eine Kleinstfestplatte vorgesehen ist, wobei der im Speicher (110) des auswählenden Endgeräts (104) abgelegte Teil der Aufzeichnung mittels eines Digital Rights Management fest an ein bestimmtes Endgerät (104) gekoppelt wird, um zu verhindern oder alternativ in begrenztem Rahmen zu erlauben, dass auch Nutzer die gespeicherte Sendung sehen, welche diese nicht zur Aufnahme programmiert haben.

4. Anordnung nach einem der Ansprüche 1 bis 3, bei der die Mittel zum Aufzeichnen zu speichernder TV-Sendungen so gestaltet sind, daß Header-Informationen der zu speichernden Videodaten an den Speicher (110) des auswählenden Endgeräts (104) gesendet werden und die restlichen zu speichernden Daten in dem mit dem PVR Server (102) gekoppelten Massenspeicher (108) abgelegt werden.

5. Anordnung nach einem der Ansprüche 1 bis 4, bei der die Mittel zum Aufzeichnen zu speichernder TV-Sendungen so gestaltet sind, daß eine zeitlich begrenzte Anfangssequenz der zu speichernden Videodaten an den Speicher (110) des auswählenden Endgeräts (104) gesendet wird und die restlichen zu speichernden Daten in dem mit dem PVR Server (102) gekoppelten Massenspeicher (108) abgelegt werden.

6. Anordnung nach einem der Ansprüche 1 bis 5, bei der die Mittel zum Aufzeichnen zu speichernder TV-Sendungen so gestaltet sind, daß jedes n-te Datenpaket der zu speichernden Videodaten an den Speicher (110) des auswählenden Endgeräts (104) gesendet wird und die restlichen zu speichernden Daten in dem mit dem PVR Server (102) gekoppelten Massenspeicher (108) abgelegt werden.

7. Anordnung nach einem der Ansprüche 1 bis 6, bei der, wenn im Speicher (110) des Endgeräts (104) Intro-Sequenzen abgelegt sind, die auch Headerinformationen umfassen, ohne die der verbleibende, im Massenspeicher (108) abgelegte Teil der Aufzeichnung nicht nutzbar ist, zunächst ein Intro aus dem lokalen Speicher (110) des Endgeräts (104) heraus wiedergegeben wird, während im Hintergrund die restlichen Daten aus dem Massenspeicher (108) angefordert und zur Wiedergabe aufbereitet werden.

8. Verfahren zum Speichern und Wiedergeben von TV-Sendungen, mit folgenden Schritten:
- Empfangen einer Vielzahl digital kodierter TV-Kanäle durch einen PVR Server (102), der eine Vielzahl von Endgeräten (104) versorgt;
- Auswählen zu speichernder TV-Sendungen durch ein Endgerät (104) und Übertragen der Auswahl an den PVR Server (102);
- Aufzeichnen zu speichernder TV-Sendungen, wobei ein kleiner Teil der bei der Aufzeichnung zu speichernden Daten an einen Speicher (110) eines auswählenden Endgeräts (104) gesendet wird und ein überwiegender Teil der zu speichernden Daten in einem mit dem PVR Server (102) gekoppelten Massenspeicher (108) abgelegt wird; und
- Zusammenführen der im Speicher (110) des auswählenden Endgeräts (104) und der im mit dem PVR Server (102) gekoppelten Massenspeicher (108) abgelegten Teile der Aufzeichnung zur Wiedergabe mittels des auswählenden Endgeräts (104),
- wobei das Zusammenführen der im Speicher (110) des auswählenden Endgeräts (104) und der im mit dem PVR Server (102) gekoppelten Massenspeicher (108) abgelegten Teile der Aufzeichnung im PVR Server (102) erfolgt und die komplettierten Videodaten zur Wiedergabe als Echtzeitdatenstrom an das Endgerät (104) gesendet werden.

9. Verfahren nach Anspruch 8, demgemäß der in dem mit dem PVR Server (102) gekoppelten Massenspeicher (108) gespeicherte überwiegende Teil der zu speichernden Daten nur bei Zusammenführung mit den im Speicher (110) des auswählenden Endgeräts (104) abgelegten Daten eine dekodierbare Bild- und Toninformation liefert.

10. Verfahren nach einem der Ansprüche 8 oder 9, demgemäß als Endgeräte-Speicher (110) ein Flash-Speicher (111) oder eine Kleinstfestplatte vorgesehen wird, wobei der im Speicher (110) des auswählenden Endgeräts (104) abgelegte Teil der Aufzeichnung mittels eines Digital Rights Management fest an ein bestimmtes Endgerät (104) gekoppelt wird, um zu verhindern oder alternativ in begrenztem Rahmen zu erlauben, dass auch Nutzer die gespeicherte Sendung sehen, welche diese nicht zur Aufnahme programmiert haben..

11. Verfahren nach einem der Ansprüche 8 bis 10, demgemäß Header-Informationen der zu speichernden Videodaten an den Speicher (110) des auswählenden Endgeräts (104) gesendet werden und die restlichen zu speichernden Daten in dem mit dem PVR Server (102) gekoppelten Massenspeicher (108) abgelegt werden.

12. Verfahren nach einem der Ansprüche 8 bis 11, demgemäß eine zeitlich begrenzte Anfangssequenz der zu speichernden Videodaten an den Speicher (110) des auswählenden Endgeräts (104) gesendet wird und die restlichen zu speichernden Daten in dem mit dem PVR Server (102) gekoppelten Massenspeicher (108) abgelegt werden.

13. Verfahren nach einem der Ansprüche 8 bis 12, demgemäß jedes n-te Datenpaket der zu speichernden Videodaten an den Speicher (110) des auswählenden Endgeräts (104) gesendet wird und die restlichen zu speichernden Daten in dem mit dem PVR Server (102) gekoppelten Massenspeicher (108) abgelegt werden.

14. Verfahren nach einem der Ansprüche 8 bis 13,bei dem, wenn im Speicher (110) des Endgeräts (104) Intro-Sequenzen abgelegt sind, die auch Headerinformationen umfassen, ohne die der verbleibende, im Massenspeicher (108) abgelegte Teil der Aufzeichnung nicht nutzbar ist, zunächst ein Intro aus dem lokalen Speicher (110) des Endgeräts (104) heraus wiedergegeben wird, während im Hintergrund die restlichen Daten aus dem Massenspeicher (108) angefordert und zur Wiedergabe aufbereitet werden.

## Claims

1. Arrangement (100) for storing and playing back TV programmes, which has the following:
- a PVR server (102) having means for receiving a multiplicity of digitally coded TV channels and means for feeding a multiplicity of terminals (104);
- at least one terminal (104) having means for selecting TV programmes (106) that are to be stored and means for transmitting the selection to the PVR server;
wherein also the following is provided:
- in the PVR server (102), means for recording TV programmes that are to be stored, wherein a small portion of the data to be stored for the recording is sent to a memory (110) of a selecting terminal (104) and a main portion of the data to be stored is stored in a mass memory (108) coupled to the PVR server (102);
- means for merging the portions of the recording that are stored in the memory (110) of the selecting terminal (104) and in the mass memory (108) coupled to the PVR server (102), for playback by means of the selecting terminal (104);
- wherein in the arrangement (100) the merging of the portions of the recording that are stored in the memory (110) of the selecting terminal (104) and in the mass memory (108) coupled to the PVR server (102) is effected in the PVR server (102) and the completed video data are sent to the terminal (104) for playback as a real-time data stream.

2. Arrangement according to Claim 1, in which the means for recording TV programmes that are to be stored are designed such that the main portion of the data to be stored that is stored in the mass memory (108) coupled to the PVR server (102) delivers a decodable piece of picture and sound information only when merged with the data stored in the memory (110) of the selecting terminal (104).

3. Arrangement according to either of Claims 1 and 2, in which the terminal memory (110) provided is a flash memory (112) or a minimum-sized hard disk, wherein the portion of the recording that is stored in the memory (110) of the selecting terminal (104) is coupled firmly to a particular terminal (104) by means of digital rights management in order to prevent, or alternatively to allow to a limited extent, the stored programme from also being seen by users who have not programmed said programme to record.

4. Arrangement according to one of Claims 1 to 3, in which the means for recording TV programmes that are to be stored are designed such that header information from the video data that are to be stored is sent to the memory (110) of the selecting terminal (104) and the remainder of the data to be stored are stored in the mass memory (108) coupled to the PVR server (102).

5. Arrangement according to one of Claims 1 to 4, in which the means for recording TV programmes that are to be stored are designed such that a temporally limited initial sequence from the video data that are to be stored is sent to the memory (110) of the selecting terminal (104) and the remainder of the data to be stored are stored in the mass memory (108) coupled to the PVR server (102).

6. Arrangement according to one of Claims 1 to 5, in which the means for recording TV programmes that are to be stored are designed such that every n-th data packet from the video data that are to be stored is sent to the memory (110) of the selecting terminal (104) and the remainder of the data to be stored are stored in the mass memory (108) coupled to the PVR server (102).

7. Arrangement according to one of Claims 1 to 6, in which, if in the memory (110) of the terminal (104) intro sequences are stored that also comprise header information without which the remaining portion of the recording that is stored in the mass memory (108) cannot be used, an intro is initially played back from the local memory (110) of the terminal (104) while in the background the remainder of the data are requested from the mass memory (108) and are conditioned for playback.

8. Method for storing and playing back TV programmes, having the following steps:
- a multiplicity of digitally coded TV channels are received by a PVR server (102) that feeds a multiplicity of terminals (104);
- TV programmes that are to be stored are selected by a terminal (104) and the selection is transmitted to the PVR server (102);
- TV programmes that are to be stored are recorded, wherein a small portion of the data to be stored for the recording is sent to a memory (110) of a selecting terminal (104) and a dominant portion of the data to be stored is stored in a mass memory (108) coupled to the PVR server (102); and
- the portions of the recording that are stored in the memory (110) of the selecting terminal (104) and in the mass memory (108) coupled to the PVR server (102) are merged for playback by means of the selecting terminal (104),
- wherein the merging of the portions of the recording that are stored in the memory (110) of the selecting terminal (104) and in the mass memory (108) coupled to the PVR server (102) is effected in the PVR server (102) and the completed video data are sent to the terminal (104) for playback as a real-time data stream.

9. Method according to Claim 8, according to which the main portion of the data to be stored that is stored in the mass memory (108) coupled to the PVR server (102) delivers a decodable piece of picture and sound information only when merged with the data stored in the memory (110) of the selecting terminal (104).

10. Method according to either of Claims 8 and 9, according to which the terminal memory (110) provided is a flash memory (111) or a minimum sized hard disk, wherein the portion of the recording that is stored in the memory (110) of the selecting terminal (104) is coupled firmly to a particular terminal (104) by means of digital rights management in order to prevent, or alternatively to allow to a limited extent, the stored programme from also being seen by users who have not programmed said programme to record.

11. Method according to one of Claims 8 to 10, according to which header information from the video data that are to be stored is sent to the memory (110) of the selecting terminal (104) and the remainder of the data to be stored are stored in the mass memory (108) coupled to the PVR server (102).

12. Method according to one of Claims 8 to 11, according to which a temporally limited initial sequence from the video data that are to be stored is sent to the memory (110) of the selecting terminal (104) and the remainder of the data to be stored are stored in the mass memory (108) coupled to the PVR server (102).

13. Method according to one of Claims 8 to 12, according to which every n-th data packet from the video data that are to be stored is sent to the memory (110) of the selecting terminal (104) and the remainder of the data to be stored are stored in the mass memory (108) coupled to the PVR server (102).

14. Method according to one of Claims 8 to 13, in which, if in the memory (110) of the terminal (104) intro sequences are stored that also comprise header information without which the remaining portion of the recording that is stored in the mass memory (108) cannot be used, an intro is initially played back from the local memory (110) of the terminal (104) while in the background the remainder of the data are requested from the mass memory (108) and are conditioned for playback.

## Revendications

1. Système (100) pour sauvegarder et reproduire des émissions TV, comportant :
- un serveur PVR (102) comportant des moyens pour recevoir une pluralité de canaux TV codés numériquement et des moyens pour desservir une pluralité de terminaux (104) ;
- au moins un terminal (104) comportant des moyens pour sélectionner des émissions TV à sauvegarder (106) et des moyens pour transmettre la sélection au serveur PVR, ;
dans lequel sont en outre prévus :
- dans le serveur PVR (102), des moyens pour enregistrer des émissions TV à sauvegarder, une petite partie des données à sauvegarder lors de l'enregistrement étant envoyée à une mémoire (110) d'un terminal sélectionneur (104) et une majeure partie des données à sauvegarder étant déposée dans une mémoire de masse (108) couplée au serveur PVR (102) ;
- des moyens pour regrouper, aux fins de la reproduction au moyen du terminal sélectionneur (104), les parties de l'enregistrement déposées dans la mémoire (110) du terminal sélectionneur (104) et des parties de l'enregistrement déposées dans la mémoire de masse (108) couplée au serveur PVR (102) ;
- le système (100) étant tel que le regroupement des parties de l'enregistrement déposées dans la mémoire (110) du terminal sélectionneur (104) et des parties de l'enregistrement déposées dans la mémoire de masse (108) couplée au serveur PVR (102) s'effectue dans le serveur PVR (102) et les données vidéo complétées sont envoyées au terminal (104) pour reproduction en tant que flux de données en temps réel.

2. Système selon la revendication 1, selon lequel les moyens pour enregistrer des émissions TV à sauvegarder sont conçus de manière telle que la majeure partie des données à sauvegarder qui est stockée dans la mémoire de masse (108) couplée au serveur PVR (102) ne fournit une information graphique et sonore décodable qu'en cas de regroupement avec les données déposées dans la mémoire (110) du terminal sélectionneur (104).

3. Système selon l'une des revendications 1 ou 2, selon lequel sont prévus, en tant que mémoire de terminaux (110), une mémoire Flash (112) ou un microdisque dur, la partie de l'enregistrement déposée dans la mémoire (110) du terminal sélectionneur (104) étant couplée à demeure à un terminal déterminé (104) au moyen d'une gestion des droits numériques afin d'empêcher, sinon de permettre, dans un cadre limité, que l'émission sauvegardée puisse également être vue par des utilisateurs qui n'ont pas programmé celle-ci en vue de l'enregistrement.

4. Système selon l'une des revendications 1 à 3, selon lequel les moyens pour enregistrer des émissions TV à sauvegarder sont conçus de manière telle que des informations d'en-tête des données vidéo à sauvegarder sont envoyées à la mémoire (110) du terminal sélectionneur (104) et que les données restantes à sauvegarder sont déposées dans la mémoire de masse (108) couplée au serveur PVR (102).

5. Système selon l'une des revendications 1 à 4, selon lequel les moyens pour enregistrer des émissions TV à sauvegarder sont conçus de manière telle qu'une séquence initiale limitée dans le temps des données vidéo à sauvegarder est envoyée à la mémoire (110) du terminal sélectionneur (104) et que les données restantes à sauvegarder sont déposées dans la mémoire de masse (108) couplée au serveur PVR (102).

6. Système selon l'une des revendications 1 à 5, selon lequel les moyens pour enregistrer des émissions TV à sauvegarder sont conçus de manière telle que chaque n^{ième} paquet de données des données vidéo à sauvegarder est envoyé à la mémoire (110) du terminal sélectionneur (104) et que les données restantes à sauvegarder sont déposées dans la mémoire de masse (108) couplée au serveur PVR (102).

7. Système selon l'une des revendications 1 à 6, selon lequel, lorsque sont déposées dans la mémoire (110) du terminal (104) des séquences d'intro qui incluent également des informations d'en-tête sans lesquelles la partie restante de l'enregistrement déposée dans la mémoire de masse (108) n'est pas utilisable, une intro est tout d'abord reproduite à partir de la mémoire locale (110) du terminal (104) pendant que, à l'arrière-plan, les données restantes sont demandées à la mémoire de masse (108) et préparées pour la reproduction.

8. Procédé pour sauvegarder et reproduire des émissions TV, comportant les étapes suivantes :
- réception d'une pluralité de canaux TV codés numériquement par un serveur PVR (102) qui dessert une pluralité de terminaux (104) ;
- sélection, par un terminal (104), d'émissions TV à sauvegarder et transmission de la sélection au serveur PVR (102) ;
- enregistrement d'émissions TV à sauvegarder, une petite partie des données à sauvegarder lors de l'enregistrement étant envoyée à une mémoire (110) d'un terminal sélectionneur (104) et une majeure partie des données à sauvegarder étant déposée dans une mémoire de masse (108) couplée au serveur PVR (102), et
- regroupement, aux fins de la reproduction au moyen du terminal sélectionneur (104), des parties de l'enregistrement déposées dans la mémoire (110) du terminal sélectionneur (104) et des parties de l'enregistrement déposées dans la mémoire de masse (108) couplée au serveur PVR (102),
- le regroupement des parties de l'enregistrement déposées dans la mémoire (110) du terminal sélectionneur (104) et des parties de l'enregistrement déposées dans la mémoire de masse (108) couplée au serveur PVR (102) s'effectuant dans le serveur PVR (102) et les données vidéo complétées étant envoyées au terminal (104) pour reproduction en tant que flux de données en temps réel.

9. Procédé selon la revendication 8, selon lequel la majeure partie des données à sauvegarder qui est stockée dans la mémoire de masse (108) couplée au serveur PVR (102) ne fournit une information graphique et sonore décodable qu'en cas de regroupement avec les données déposées dans la mémoire (110) du terminal sélectionneur (104).

10. Procédé selon l'une des revendications 8 ou 9, selon lequel sont prévus, en tant que mémoire de terminaux (110), une mémoire Flash (111) ou un microdisque dur, la partie de l'enregistrement déposée dans la mémoire (110) du terminal sélectionneur (104) étant couplée à demeure à un terminal déterminé (104) au moyen d'une gestion des droits numériques afin d'empêcher, sinon de permettre, dans un cadre limité, que l'émission sauvegardée puisse également être vue par des utilisateurs qui n'ont pas programmé celle-ci en vue de l'enregistrement.

11. Procédé selon l'une des revendications 8 à 10, selon lequel des informations d'en-tête des données vidéo à sauvegarder sont envoyées à la mémoire (110) du terminal sélectionneur (104) et les données restantes à sauvegarder sont déposées dans la mémoire de masse (108) couplée au serveur PVR (102).

12. Procédé selon l'une des revendications 8 à 11, selon lequel une séquence initiale limitée dans le temps des données vidéo à sauvegarder est envoyée à la mémoire (110) du terminal sélectionneur (104) et les données restantes à sauvegarder sont déposées dans la mémoire de masse (108) couplée au serveur PVR (102).

13. Procédé selon l'une des revendications 8 à 12, selon lequel chaque n^{ième} paquet de données des données vidéo à sauvegarder est envoyé à la mémoire (110) du terminal sélectionneur (104) et les données restantes à sauvegarder sont déposées dans la mémoire de masse (108) couplée au serveur PVR (102).

14. Procédé selon l'une des revendications 8 à 13, selon lequel, lorsque sont déposées dans la mémoire (110) du terminal (104) des séquences d'intro qui incluent également des informations d'en-tête sans lesquelles la partie restante de l'enregistrement déposée dans la mémoire de masse (108) n'est pas utilisable, une intro est tout d'abord reproduite à partir de la mémoire locale (110) du terminal (104) pendant que, à l'arrière-plan, les données restantes sont demandées à la mémoire de masse (108) et préparées pour la reproduction.
